# EUROPÄISCHE PATENTSCHRIFT

(11) **EP 2 852 805 B1**
(45) Veröffentlichungstag und Bekanntmachung des Hinweises auf die Patenterteilung: **11.07.2018**
(21) Anmeldenummer: 13723468.8
(22) Anmeldetag: 14.05.2013
(51) Int. Cl.: F01N 3/00, F02M 26/32, F02M 26/35, F28D 7/10, F28D 7/16, F28D 21/00, F28F 9/02, F28F 17/00, F28F 19/00

(54) **ABGASWÄRMEÜBERTRAGER**
EXHAUST GAS HEAT EXCHANGER
ÉCHANGEUR DE CHALEUR DE GAZ D'ÉCHAPPEMENT

(30) Priorität: 15.05.2012 DE 102012208100
(43) Veröffentlichungstag der Anmeldung: 01.04.2015
(73) Patentinhaber: MAHLE Behr GmbH & Co. KG, 70469 Stuttgart (DE)
(72) Erfinder: GESKES, Peter, 73760 Ostfildern (DE)
(74) Vertreter: Grauel, Andreas
(86) Internationale Anmeldenummer: PCT/EP2013/059897
(87) Internationale Veröffentlichungsnummer: WO 2013/171190

(56) Entgegenhaltungen:
- EP-A1- 0 070 371
- AT-B- 287 030
- DE-A1-102006 059 291
- FR-A1- 2 925 351
- GB-A- 1 212 526
- US-A- 3 262 489

## Beschreibung

### Technisches Gebiet

Die Erfindung betrifft einen Abgaswärmeübertrager, insbesondere für den Einsatz in einem Kraftfahrzeug, mit mindestens einem ein erstes Fluid führendem ersten Strömungskanal, welcher in seinen Endbereichen in jeweils einen Rohrboden aufgenommen ist, mit einem Gehäuse, welches den ersten Strömungskanal umgibt, wobei das Gehäuse eine Eintrittsöffnung und eine Austrittsöffnung aufweist und es einen zweiten Strömungskanal für ein zweites Fluid bildet, wobei es von einem zweiten Fluid durchströmbar ist und der erste Strömungskanal von dem zweiten Fluid umströmbar ist, die Rohrböden sind in das Gehäuse eingesetzt so, dass der erste Strömungskanal von dem zweiten Strömungskanal abgedichtet ist, mit einem ersten Diffusor, der das erste Fluid in den ersten Strömungskanal hineinleitet und einem zweiten Diffusor, der das erste Fluid aus dem ersten Strömungskanal hinausleitet.

### Stand der Technik

Abgaswärmeübertrager werden in Kraftfahrzeugen heute eingesetzt um die Abgastemperatur zu reduzieren und damit die Stickoxid- und Partikelemissionen deutlich zu vermindern. Hierbei wird ein Teil des Abgases nach dem Verbrennungsmotor abgezweigt und anschließend durch einen entsprechenden Abgaswärmeübertrager geleitet.

Das abgekühlte Abgas wird dann mit der vom Verbrennungsmotor angesaugten Frischluft vermischt und wieder dem Verbrennungsmotor zugeführt. Am Eintritt des Abgaswärmeübertragers treten Temperaturen von bis zu 700° Celsius auf.

Es sind Abgaswärmeübertrager bekannt, etwa aus der DE 10 2007 011 184 A1, welche aus abgasführenden Rohren bestehen, die beidseitig in Böden eingesteckt sind und mit diesen etwa durch löten oder schweißen verbunden sind und die Rohre von einem Gehäuse umfasst sind. Das Abgas wird dabei über an den Böden angeschlossenen Diffusoren in die Rohre geleitet. Das Gehäuse wird dabei von einem Kühlmittel durchströmt, wodurch die abgasführenden Rohre von dem Kühlmittel umströmt sind.

Zwischen dem Abgas in den Rohren und dem Kühlmittel welches die Rohre umströmt findet dabei ein Wärmeübergang statt wodurch das Abgas abgekühlt wird.

Nachteilig am Stand der Technik ist, dass es in Abgaswärmeübertragern der beschriebenen Bauart mitunter zu Siedevorgängen im Kühlmittel kommt. Dies beeinträchtigt die Lebensdauer des Abgaswärmeübertragers an sich und kann sich negativ auf die chemische Zusammensetzung des Kühlmittels auswirken. Siedevorgänge können dabei insbesondere im Eintrittsbereich stattfinden, da hier das heiße Abgas direkt auf den Boden des Abgaswärmeübertragers auftrifft und der Boden des Abgaswärmeübertragers in direktem Kontakt mit dem Kühlmittel steht.

Weiterhin kann es auf der Austrittsseite des Abgaswärmeübertragers zu einer Kondensation des Abgases kommen. Das sich dabei niederschlagende Kondensat kann mit dem in den Verbrennungsmotor rückgeführten Abgas in den Brennraum eindringen und dort zu erhöhter Korrosion und anderweitiger Beschädigung einzelner Komponenten führen,

Weitere für Abgas geeignete Wärmeübertrager sind aus EP 0070371 A und AT 287030 B bekannt.

### Darstellung der Erfindung, Aufgabe, Lösung, Vorteile

Daher ist es die Aufgabe der vorliegenden Erfindung einen Abgaswärmeübertrager bereitzustellen, in welchem keine Siedevorgänge auftreten und weiterhin die Entstehung, bzw. die Weiterleitung von Kondensat von der Austrittsseite in den Ansaugbereich des Verbrennungsmotors des Abgaswärmeübertragers ausgeschlossen ist.

Die Aufgabe der vorliegenden Erfindung wird durch einen Abgaswärmeübertrager mit den Merkmalen gemäß Anspruch 1 gelöst. Vorteilhafte Weiterbildungen der vorliegenden Erfindung sind in den Unteransprüchen beschrieben.

Vorteilhaft ist ein Abgaswärmeübertrager, insbesondere für den Einsatz in einem Kraftfahrzeug, mit mindestens einem ein erstes Fluid führendem ersten Strömungskanal, welcher in seinen Endbereichen in jeweils einen Rohrboden aufgenommen ist, mit einem Gehäuse, welches den ersten Strömungskanal umgibt, wobei das Gehäuse eine Eintrittsöffnung und eine Austrittsöffnung aufweist und es einen zweiten Strömungskanal für ein zweites Fluid bildet, wobei es von einem zweiten Fluid durchströmbar ist und der erste Strömungskanal von dem zweiten Fluid umströmbar ist, wobei die Rohrböden in das Gehäuse derart eingesetzt sind, dass der erste Strömungskanal von dem zweiten Strömungskanal abgedichtet ist, mit einem ersten Diffusor, der das erste Fluid in den ersten Strömungskanal hineinleitet und einem zweiten Diffusor, der das erste Fluid aus dem ersten Strömungskanal hinausleitet, wobei der Abgaswärmeübertrager zumindest ein erstes Abschirmelement aufweist, welches zumindest einen ersten Durchzug aufweist und zumindest ein erstes Distanzelement aufweist, welches auf einen Rohrboden von der dem ersten Strömungskanal abgewandten Seite aufgesetzt ist, wobei die Außenkontur des Durchzuges mit der Innenkontur des ersten Strömungskanals im Wesentlichen übereinstimmt, und wobei das erste Abschirmelement einen zumindest teilweise umlaufenden Randbereich aufweist, mit dem das Abschirmelement an dem ersten Diffusor abgestützt ist. Dies ist insbesondere vorteilhaft, da das Abschirmelement eine thermische Beabstandung zwischen dem durch den Wärmeübertrager ersten Fluid und dem Rohrboden und den ersten Strömungskanälen bildet. Hierdurch wird die Aufheizung des Wärmeübertragers positiv beeinflusst.

Auch vorteilhaft ist es, wenn der Durchzug in einen ersten Strömungskanal hineinragt. Hierdurch wird das das Abschirmelement durchströmende Fluid direkt in die ersten Strömungskanäle geleitet. Ein direkter Kontakt zwischen dem durchströmenden Fluid und dem Rohrboden kommt damit nicht zu Stande.

Dies ist vorteilhaft um das Abschirmelement so auf dem Rohrboden positionieren zu können, dass die Durchzüge in die ersten Strömungskanäle hineinragen, um das Fluid direkt in das Innere der ersten Strömungskanäle leiten zu können.

Auch zu bevorzugen ist es, wenn der äußere Querschnitt des Durchzugs kleiner als der innere Querschnitt des ersten Strömungskanals ist.

Weiterhin vorteilhaft ist es, wenn die Außenkontur des Durchzugs die Innenkontur des ersten Strömungskanals nicht berührt.

Durch den kleineren äußeren Querschnitt des Durchzugs im Vergleich zum inneren Querschnitt des Strömungskanals kann der Durchzug vom Strömungskanal so beabstandet werden, dass sich beide nicht direkt berühren, was der thermischen Isolation zuträglich ist.

Auch zweckmäßig ist es, wenn das Distanzelement das erste Abschirmelement relativ zum Rohrboden beabstandet. Hierdurch wird ebenfalls die thermische Isolation zwischen dem Rohrboden und dem Abschirmelement erhöht, was insgesamt zu einer vorteilhafteren Temperaturverteilung im Wärmeübertrager beiträgt. Der zumindest teilweise umlaufende aufgestellte Randbereich des ersten Abschirmelementes dient insbesondere zur dauerhaften Positionierung des Abschirmelementes im Inneren des Wärmeübertragers.

Auch zweckmäßig ist es, wenn ein zweites Abschirmelement an mindestens einer Stelle fest mit dem zweiten Diffusor verbunden ist.

Durch die Anordnung eines zweiten Abschirmelementes insbesondere im zweiten Diffusor kann die thermische Isolationswirkung des Abschirmelementes auf beiden Seiten des Wärmeübertragers erreicht werden. Die Anordnung eines zweiten Abschirmelementes auf der zweiten Seite des Wärmeübertragers kann zusätzlich noch vorteilhaft für die Abscheidung von Kondenswasser sein, welches sich im Rahmen der Abkühlung des durch den Wärmeübertragers strömenden Fluids bildet.

Außerdem vorteilhaft ist es, wenn der zweite Diffusor eine erste Öffnung in einer Seitenwand aufweist, welche zwischen der dem Gehäuse zugewandten Eintrittsöffnung des zweiten Diffusors und der Verbindungsstelle des zweiten Abschirmelementes mit dem zweiten Diffusor angeordnet ist.

Durch diese Öffnung im Diffusor kann das oben bereits angesprochene Kondenswasser, was sich an den Wandungen der ersten Strömungskanäle niederschlägt und durch den Luftspalt, zwischen dem zweiten Abschirmelement und den ersten Strömungskanälen entlang aus den ersten Strömungskanälen abläuft aus dem Wärmeübertrager abgeleitet werden und so dem Fluidstrom des ersten Fluids entzogen werden.

Auch zweckmäßig ist es, wenn der zweite Diffusor einen in Strömungsrichtung des ersten Fluids dem zweiten Abschirmelement nachgeordneten Wasserabscheider aufweist.

Dieser Wasserabscheider kann zusätzlich Feuchtigkeit, welche mit dem ersten Fluid durch den Wärmeübertrager strömt aus dem Fluidstrom herausfiltern. Dadurch werden vorteilhafte Fluideigenschaften erreicht, insbesondere wenn es sich bei dem ersten Fluid um Abgas handelt, was nach dem Durchströmen des Wärmeübertragers zumindest teilweise wieder einem Verbrennungsmotor zugeführt wird.

Weitehrhin zu bevorzugen ist es, wenn das zweite Abschirmelement im zumindest teilweise aufgestellten Randbereich eine zweite Öffnung aufweist, welche zwischen dem nachgeordneten Wasserabscheider und der dem Gehäuse zugewandten Eintrittsöffnung des zweiten Diffusors angeordnet ist.

Durch eine so angeordnete Öffnung kann das am Wasserabscheider niedergeschlagene Kondenswasser aus dem Wärmeübertrager vorteilhaft abgeführt werden.

Vorteilhaft ist auch ein Abgaswärmeübertrager, insbesondere nach einem der vorhergehenden Ansprüche, wobei er eine Vielzahl von ersten Strömungskanälen aufweist, mit einem ersten Abschirmelement und einem zweiten Abschirmelement, welche mengenmäßig eine, der Vielzahl der ersten Strömungskanäle entsprechende Anzahl von Durchzügen aufweisen und eine Vielzahl von Distanzelementen aufweisen, wobei jeweils ein Abschirmelement von der dem Gehäuse abgewandten Seite auf einen der Rohrböden aufgesetzt ist.

Eine Ausführung eines Abgaswärmeübertragers in dieser Form ist insbesondere für die Anwendung im Abgasstrang eines Kraftfahrzeuges vorteilhaft. Durch das erste Abschirmelement auf der Einströmseite des Wärmeübertragers wird vorteilhaft eine thermische Isolation des Rohrbodens und der ersten Strömungskanäle erreicht, durch das zweite Abschirmelement an der Ausströmseite des Wärmeübertragers wird vorteilhaft das entstehende Kondenswasser aus dem Fluidstrom entfernt.

### Kurze Beschreibung der Zeichnungen

Im Folgenden wird die Erfindung anhand eines Ausführungsbeispiels unter Bezugnahme auf die Zeichnung detailliert erläutert. In der Zeichnung zeigen:
- Fig.1: einen Schnitt durch einen erfindungsgemäßen Rohrbündelwärmeübertrager mit einem zusätzlich eingesetzten Abschirmelement,
- Fig. 2: eine schematische Darstellung eines Ausschnittes eines Abgaswärmeübertragers, in dem das Kühlmittel am Eintrittsbereich siedet,
- Fig. 3: eine Detailansicht des in Figur 1 gezeigten Abgaswärmeübertragers, mit einer Darstellung der Gasströmung und der Kühlmittelströmung im Abgaswärmeübertrager,
- Fig. 4: eine schematische Darstellung eines Ausschnitts eines Abgaswärmeübertragers, in dem das durchströmende Abgas am Austrittsbereich kondensiert,
- Fig. 5: eine Detailansicht des Austrittsbereichs eines erfindungsgemäßen Abgaswärmeübertragers, mit einer Darstellung der Gasströmung und der Kühlmittelströmung im Abgaswärmeübertrager und
- Fig. 6: einen Schnitt durch einen erfindungsgemäßen Abgaswärmeübertrager, mit einer Darstellung der Austrittsseite des Abgaswärmeübertragers mit Ablassöffnung für das am Austrittsbereich entstehende Kondensat.

### Bevorzugte Ausführung der Erfindung

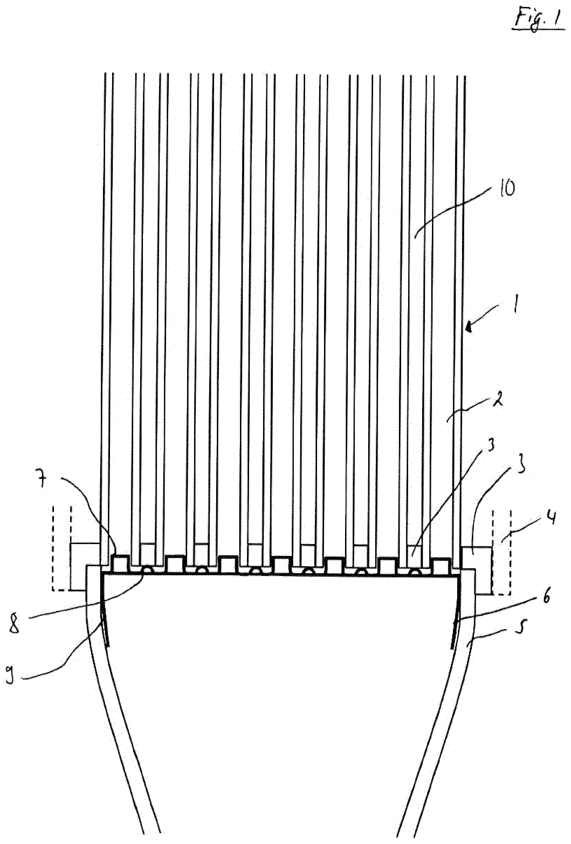

Figur 1 zeigt einen Schnitt durch einen Abgaswärmeübertrager 1. Der Abgaswärmeübertrager 1 besteht aus einer Vielzahl von Strömungskanälen 2 durch welche ein Fluid, in diesem Falle ein Abgas, strömt.

Die Strömungskanäle 2 sind an ihren Enden in Rohrböden 3 aufgenommen. Die in den Rohrböden 3 aufgenommenen Strömungskanäle 2 sind von einem Gehäuse 4 derart umgeben, dass das Gehäuse 4 mit den Rohrböden 3 eine dichte Verbindung ergibt, welches die Strömungskanäle 2 von einem Strömungskanal 10 im Inneren des Gehäuses trennt.

Das Gehäuse 4 weist eine in der Figur 1 nicht gezeigte Eintrittsöffnung und Austrittsöffnung auf, wodurch ein zweites Fluid durch das Gehäuse 4 strömen kann. Die Strömungskanäle 2, welche das erste Fluid führen, werden dabei umströmt, Der Wärmeübergang findet zwischen dem ersten Fluid, weiches innerhalb der Strömungskanäle 2 strömt und dem zweiten Fluid, welches durch das Gehäuse 4 und damit im Strömungskanal 10 um die Strömungskanäle 2 strömt, statt.

In den Rohrboden 3 ist ein Diffusor 5 eingesetzt, welcher das Fluid in die Strömungskanäle 2 zuleitet oder ableitet, je nach Strömungsrichtung des Fluids. In dem in Figur 1 gezeigten Teilausschnitt ist der Einströmbereich des Abgaswärmeübertragers 1 dargestellt.

Das Abgas strömt in den Diffusor 5 ein und verteilt sich dort auf die Strömungskanäle 2 und durchströmt den Wärmeübertrager 1 entlang dieser.

Um ein direktes Auftreffen des einströmenden Abgases auf den Rohrboden 3 zu verhindern ist in dem in Figur 1 gezeigten Wärmeübertrager 1 zusätzlich ein Abschirmelement 6 integriert.

Das Abschirmelement 6 weist mehrere Durchzüge 7 auf sowie mehrere Distanzelemente 8. Es wird mit den Durchzügen 7 in die Strömungskanäle 2 eingesetzt und sitzt mit den Distanzelementen 8 auf dem Rohrboden 3 des Wärmeübertragers 1 auf. Erfindungsgemäß wichtig ist hierbei, dass die Durchzüge 7 derart ausgestaltet sind, dass sie nicht mit den Innenflächen der Strömungskanäle 2 in direktem Kontakt stehen. Das Abschirmelement 6 weist weiterhin einen seitlich aufgestellten Randbereich auf, welcher die innere Form des Diffusors 5 abbildet und somit ermöglicht, das Abschirmelement 6 seitlich am Diffusor 5 abzustützen.

Durch das Abschirmelement 6 wird erreicht, dass die heißen einströmenden Abgase nicht direkt auf den Rohrboden 3 und die Strömungskanäle 2 auftreffen, sondern zuerst auf das Abschirmelement 6, welches aufgrund seiner konstruktiven Gestaltung zum Rohrboden 3 und den Strömungskanälen 2 beabstandet ist, auftrifft.

Zwischen dem Abschirmelement 6 und dem Rohrboden 3 sowie den Strömungskanälen 2 ist aufgrund der Beabstandung durch die Distanzelemente 8 ein Luftraum ausgebildet, welcher eine Isolationswirkung hinsichtlich der Temperatur des Abgases besitzt.

Die Durchzüge 7 entsprechen in ihrer Außenkontur der Innenkontur der Strömungskanäle 2. Die Querschnittsöffnung der Durchzüge 7 ist jedoch kleiner gestaltet als der Innenquerschnitt der Rohre 2, so dass eine direkte Kontaktierung der Durchzüge mit den Wandflächen der Strömungskanäle 2 vermieden wird.

In der in Figur 1 gezeigten Darstellung weist das Abschirmelement 6, welches vorzugsweise aus einem Material ist, das den hohen Temperaturen des Abgasstroms widersteht, eine Anzahl von Distanzelementen auf, welche den Zwischenräumen zwischen den Strömungskanälen 2 entspricht. Damit stützt sich das Abschirmelement 6 auf dem Rohrboden 3 in den Bereichen zwischen den Strömungskanälen 2 ab. Seitlich stützt sich zusätzlich das Abschirmelement 6 an den Innenflächen des Diffusors 5 ab.

In alternativen Ausführungsformen kann die Ausgestaltung der Distanzelemente 8 sowie die Anzahl der Distanzelemente 8 von der hier gezeigten Ausführung abweichen. Vorzugsweise ist eine möglichst geringe Kontaktfläche zwischen dem Abschirmelement 6 und dem Rohrboden 3 zu erzeugen. In alternativen Ausführungsformen ist es ebenfalls denkbar, das Abschirmelement 6 vollständig im Diffusor 5 abzustützen, so dass keine zusätzliche Abstützung des Abschirmelements 6 gegenüber dem Rohrboden notwendig ist. Dies würde die Isolationswirkung des Abschirmelementes 6 noch weiter erhöhen. Dies könnte beispielsweise durch eine umlaufende Nut an der Innenfläche des Diffusors, in welche das Abschirmelement eingesetzt wird erreicht werden.

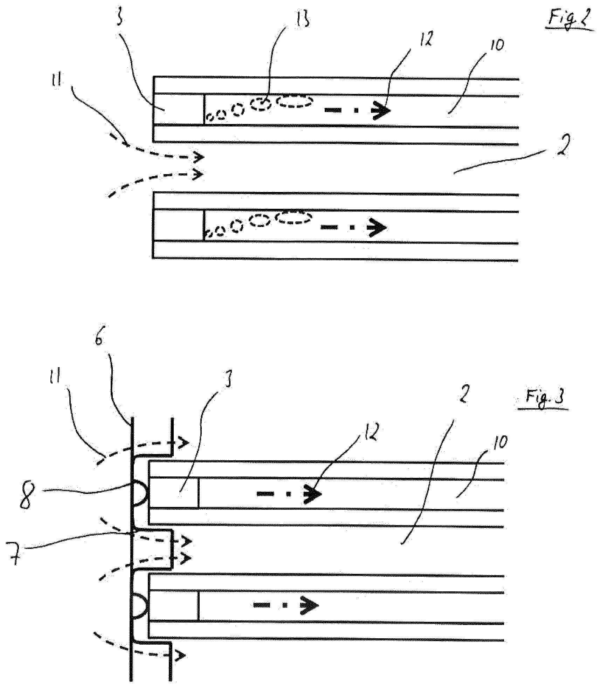

Die Figur 2 zeigt eine Detailansicht eines Strömungskanals 2, durch welchen das Abgas strömt sowie zweier Strömungskanäle 10, welche von dem Kühlmittel durchflossen sind. In Figur 2 ist dargestellt wie innerhalb der Strömungskanäle 10 des Kühlmittels Bereiche entstehen, in welche das Kühlmittel zu sieden beginnt. Diese Siedebereiche 13 entstehen vornehmlich an der Seite des Abgaswärmeübertragers 1, die der Eintrittsseite des Abgases zugewandt ist.

Durch das Auftreffen des heißen Abgases auf den Rohrboden 3 erwärmt sich der Rohrboden 3 sowie die angeschlossenen Wandungen der Strömungskanäle 2 beziehungsweise 10. Die Temperatur des Abgases wird somit über die Brücke des Rohrbodens 3 direkt auf das Kühlmittel, welches im Inneren der Strömungskanäle 10 strömt, übertragen. Ist die Temperatur des Abgases entsprechend hoch genug und kommt zusätzlich noch eine schlechte Durchströmung des Strömungskanals 10 hinzu, kann es dazu führen, dass das Kühlmittel zu sieden beginnt.

Durch das Sieden kann die chemische Eigenschaft des Kühlmittels verändert werden. So können etwa Silikate, welche im Kühlmittel gelöst sind, zerstört werden, was zu einer höheren korrosiven Belastung der Materialien, insbesondere der Aluminiumwerkstoffe eines Abgaswärmeübertragers 1 führt.

Die Figur 3 zeigt eine ähnliche Darstellung wie die Figur 2. Zusätzlich ist in Figur 3 das Abschirmelement 6 analog der Figur 1 dargestellt, welches dazu beiträgt, Siedebereiche innerhalb des Kühlmittels zu vermindern beziehungsweise auszuschließen.

Das Abschirmelement 6 ist wie in Figur 1 bereits beschrieben, über die Distanzelemente 8 auf dem Rohrboden 3 abgestützt. Zusätzlich ragen die Durchzüge 7 in die Strömungskanäle 2 hinein, ohne diese dabei zu berühren. Durch die geringe Kontaktfläche des Abschirmelementes 6 zu dem Rohrboden 3 beziehungsweise zu den Wandungen der Strömungskanäle 2 tritt eine Isolationswirkung ein.

Die hohen Temperaturen des Abgases, welche analog der Pfeile 11 in Figur 2 durch den Abgaswärmeübertrager 1 strömen, trifft somit nicht mehr direkt auf den Rohrboden 3 beziehungsweise die Wandungen der Strömungskanäle 2, was zu einer thermischen Entlastung dieser Bauteile führt. Wie bereits in der Beschreibung zu Figur 1 erwähnt, ist insbesondere die thermische Entkopplung des Abschirmelementes 6 zum Rohrboden 3 beziehungsweise den Wandungen der Strömungskanäle 2 von großer Bedeutung.

In den Figuren 1, 2 und 3 wurde jeweils die Eintrittsseite des Abgaswärmeübertragers 1 beschrieben.

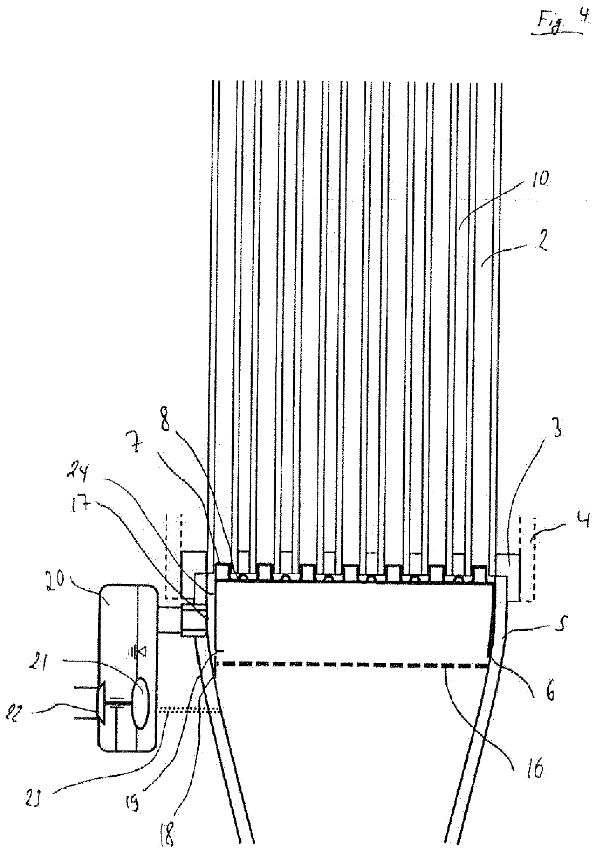

Die Figur 4 hingegen zeigt einen Schnitt durch einen Abgaswärmeübertrager 1 und dabei insbesondere die Austrittsseite, auf welcher das den Abgaswärmeübertrager durchströmende Abgas aus den Strömungskanälen 2 in den Diffusor 5 austritt und schließlich den Abgaswärmeübertrager 1 verlässt.

Die verwendeten Bezugszeichen stimmen mit denen der vorherigen Figuren überein. Neue Elemente werden durch entsprechend neue Bezugszeichen gekennzeichnet.

Der Aufbau des Abschirmelementes 6 ist auch auf der Austrittsseite weitestgehend mit dem des Aufbaus der Eintrittsseite aus der Figur 1 beziehungsweise Figur 3 identisch. Abweichend zu der Ausführung an der Eintrittsseite ist nun das Abschirmelement 6 an mindestens einer Stelle fest mit dem Diffusor 5 verbunden.

Vorteilhafterweise ist diese Verbindungsstelle im unteren Bereich des Abgaswärmeübertragers 1 angeordnet. Das Abschirmelement 6 ist dabei so mit der Innenwand des Diffusors 5 verbunden, dass es zu der Innenwand des Diffusors 5, insbesondere im Bereich des Diffusors, welcher in den Rohrboden 3 eingesteckt ist, beabstandet ist. Dies ermöglicht, dass sich in dem sich zwischen dem Abschirmelement 6 und der Innenfläche des Diffusors 5 bildenden Hohlraum 24 das Kondensat, welches im Inneren der Strömungskanäle 2 in der Nähe des Austrittsbereichs entsteht, sammeln kann.

Das durch den Abgaswärmeübertrager 1 strömende Abgas wird entlang der Strömungskanäle 2 durch das die Strömungskanäle 2 umströmende Kühlmittel stark abgekühlt. Aufgrund dieser Abkühlung kann es vorkommen, dass das Abgas insbesondere in dem der Austrittsseite zugewandten Endbereich der Strömungskanäle 2 kondensiert. Da diese Kondensattropfen, sofern sie ungehindert weiter in den Diffusor 5 strömen, über eine eventuell vorhandene Abgasrückführung wieder in den Verbrennungsmotor gelangen könnten, wo sie Korrosion und anderweitige Schäden verursachen können, ist die Weiterleitung des Kondensats aus dem Abgaswärmeübertrager 1 zu vermeiden.

Das Abschirmelement 6 erfüllt diese Funktion an der Austrittsseite des Abgaswärmeübertragers 1. Im Gegensatz zur Eintrittsseite, wo das Abschirmelement 6 als thermische Isolation des Rohrbodens 3 sowie der Wandung der Strömungskanäle 2 dient, dient das Abschirmelement 6 an der Austrittsseite des Abgaswärmeübertragers 1 nun als Abscheideelement, welches das entstehende Kondensat aus dem Abgaswärmeübertrager 1 leitet.

Wie auch auf der Eintrittsseite ragen Durchzüge 7 in die Strömungskanäle 2 hinein und weiterhin ist das Abschirmelement 6 über Distanzelemente 8, welche mit dem Rohrboden 3 in Kontakt stehen, auf dem Rohrboden abgestützt. Ebenfalls sind die Durchzüge 7 zu den Innenflächen der Strömungskanäle 2 beabstandet.

Das sich insbesondere an den Innenwänden der Strömungskanäle 2 bildende Kondensat kann nun durch die Spalte, die zwischen den Durchzügen 7 und den Innenflächen der Strömungskanäle 2 entstehen, aus den Strömungskanälen 2 ablaufen. Das Kondensat sammelt sich so an der den Strömungskanälen 2 zugewandten Seite des Abschirmelementes 6 und läuft entsprechend dort nach unten.

Durch die Beabstandung des unteren aufgestellten Randbereichs des Abschirmelementes 6 zur Innenwand des Diffusors 5 entsteht der Hohlraum 24, welcher das am Abschirmelement 6 gesammelte und herunterlaufende Kondensat aufnehmen kann. Das Kondensat ist somit wirksam aus dem Abgasstrom entfernt.

Um noch mehr im Abgas enthaltenes Kondensat aus dem Abgasstrom zu entfernen, ist in Figur 4 ein zusätzlicher Wasserabscheider 16 dargestellt. Dieser ist im Inneren des Diffusors 5 angeordnet und in Richtung des Abgasstroms dem Abschirmelement 6 nachgeordnet.

Der Wasserabscheider 16 ist im Wesentlichen ein Lochblech. Am Wasserabscheider 16 schlägt sich im Abgasstrom enthaltenes Kondensat nieder, welches dann analog dem Kondensat, welches am Abschirmelement 6 niederschlägt, am Wasserabscheider 16 nach unten läuft und dort über eine Öffnung, welche im Abschirmelement 6 vorgesehen ist, ebenfalls in den zwischen den Abschirmelement 6 und der Innenwand des Diffusors 5 entstandenen Hohlraum 24 läuft.

Der Diffusor 5 weist eine Öffnung 17 auf, welche in der Außenwand des Diffusors 5 im Bereich des Hohlraums 24 angeordnet ist. Über diese Öffnung 17 kann das am Wasserabscheider 16 und dem Abschirmelement 6 gesammelte Kondensat aus dem Abgaswärmeübertrager 1 ablaufen. Außerhalb des Abgaswärmeübertragers ist ein Kondensatsammler 20 dargestellt, welcher über eine Leitung mit der Öffnung 17 des Diffusors 5 verbunden ist.

In dem Kondensatsammler 20 fließt das am Abschirmelement 6 und am Wasserabscheider 16 gesammelte Kondensat. Der in Figur 4 gezeigte Kondensatsammler 20 weist in seinem Inneren ein Schwimmerventil 21 auf, welches abhängig vom Füllstand des Kondensatsammlers 20 das Kondensat über eine Ablassöffnung 22 abgibt.

Optional kann der Kondensatsammler 20 eine Entlüftungsöffnung aufweisen, welche über eine Leitung mit dem Diffusor 5 in Verbindung steht. Hierüber können Restmengen an Abgas, welche über die Öffnung 17 aus dem Diffusor 5 in den Kondensatsammler 20 geleitet wurden, wieder in den Diffusor 5 zurückgeleitet werden.

Die hier außerhalb des Diffusors 5 gezeigte Sammeleinheit für das Kondensat kann in alternativen Ausführungsformen des Abgaswärmeübertragers auch vollständig entfallen, sofern eine andere Ableitung für das Kondensat vorgesehen ist. Zum Beispiel wäre es denkbar, das Kondensat über eine Düse, welche das Kondensat äußerst fein zerstäubt, wieder in den Diffusor 5 zurückzuführen, wo es dann im Rahmen einer Abgasrückführung wieder in den Verbrennungsprozess des Verbrennungsmotors geführt wird.

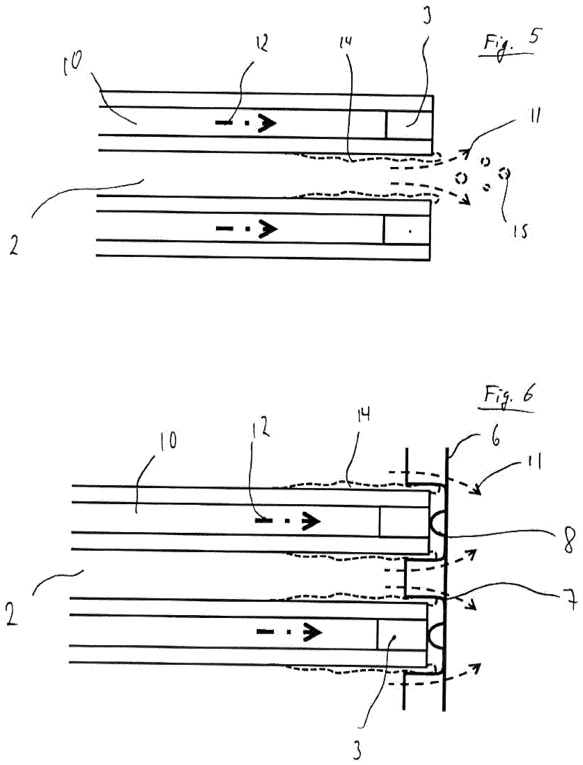

Die Figur 5 zeigt eine Detailansicht ähnlich der Figur 2. Im Unterschied zu Figur 2 ist nun hier die Austrittsseite des Abgaswärmeübertragers dargestellt.

Es ist zu erkennen, dass im Strömungskanal 2, welcher das Abgas führt, insbesondere im Endbereich ein Kondensationsbereich 14 entsteht, in welchem sich flüssiges Kondensat aus dem Abgasstrom an den Innenwänden des Strömungskanals 2 niederschlägt. Hierdurch können Kondensattropfen 15 entstehen, welche mit dem Abgasstrom mitgeführt werden.

Die Figur 6 zeigt ebenfalls wieder die Anordnung der Figur 4 mit dem Unterschied, dass nun hier das Abschirmelement 6 zusätzlich dargestellt ist. Wie in den bereits zuvor beschriebenen Figuren stützt sich das Abschirmelement 6 über die Distanzelemente 8 am Rohrboden 3 des Abgaswärmeübertragers 1 ab. Die Durchzüge 7 tragen auch in Figur 6 in die Strömungskanäle 2 des Abgaswärmeübertragers hinein, ohne diese jedoch zu berühren.

Dargestellt ist neben den Kondensationsbereichen 14 auch die Abgasströmung 11, welche entlang der Strömungskanäle 2 durch das Abschirmelement 6 verläuft.

## Patentansprüche

1. Abgaswärmeübertrager (1) für den Einsatz in einem Kraftfahrzeug, mit mindestens einem ein erstes Fluid führendem ersten Strömungskanal (2), welcher in seinen Endbereichen in jeweils einen Rohrboden (3) aufgenommen ist, mit einem Gehäuse (4), welches den ersten Strömungskanal (2) umgibt, wobei das Gehäuse (4) eine Eintrittsöffnung und eine Austrittsöffnung aufweist und es einen zweiten Strömungskanal (10) für ein zweites Fluid bildet, wobei es von einem zweiten Fluid durchströmbar ist und der erste Strömungskanal (2) von dem zweiten Fluid umströmbar ist, wobei die Rohrböden (3) in das Gehäuse (4) derart eingesetzt sind, dass der erste Strömungskanal (2) von dem zweiten Strömungskanal (10) abgedichtet ist, mit einem ersten Diffusor (5), der das erste Fluid in den ersten Strömungskanal (2) hineinleitet und einem zweiten Diffusor (5), der das erste Fluid aus dem ersten Strömungskanal (2) hinausleitet wobei der Abgaswärmeübertrager (1) zumindest ein erstes Abschirmelement (6) aufweist, welches zumindest einen ersten Durchzug (7) aufweist und zumindest ein erstes Distanzelement (8) aufweist, welches auf einen Rohrboden (3) von der dem ersten Strömungskanal (2) abgewandten Seite aufgesetzt ist, und wobei die Außenkontur des Durchzuges (7) mit der Innenkontur des ersten Strömungskanals (2) im Wesentlichen übereinstimmt, **dadurch gekennzeichnet, dass** das erste Abschirmelement (6) einen zumindest teilweise umlaufenden aufgestellten Randbereich (9) aufweist, mit dem das Abschirmelement (6) an dem ersten Diffusor (5) abgestützt ist.

2. Abgaswärmeübertrager (1) nach Anspruch 1, **dadurch gekennzeichnet, dass** der Durchzug (7) in einen ersten Strömungskanal (2) hineinragt.

3. Abgaswärmeübertrager (1) nach Anspruch 1 oder 2, **dadurch gekennzeichnet, dass** der äußere Querschnitt des Durchzugs (7) kleiner als der innere Querschnitt des ersten Strömungskanals (2) ist.

4. Abgaswärmeübertrager (1) nach einem der vorherigen Ansprüche, **dadurch gekennzeichnet, dass** die Außenkontur des Durchzugs (7) die Innenkontur des ersten Strömungskanals (2) nicht berührt.

5. Abgaswärmeübertrager (1) nach einem der vorhergehenden Ansprüche, **dadurch gekennzeichnet, dass** das Distanzelement (8) das erste Abschirmelement (6) relativ zum Rohrboden (3) beabstandet.

6. Abgaswärmeübertrager (1) nach einem der vorhergehenden Ansprüche, **dadurch gekennzeichnet, dass** ein zweites Abschirmelement (6) an mindestens einer Stelle (18) fest mit dem zweiten Diffusor (5) verbunden ist.

7. Abgaswärmeübertrager (1) nach einem der vorhergehenden Ansprüche, **dadurch gekennzeichnet, dass** der zweite Diffusor (5) eine erste Öffnung (17) in einer Seitenwand aufweist, welche zwischen der dem Gehäuse (4) zugewandten Eintrittsöffnung des zweiten Diffusors (5) und der Verbindungsstelle des zweiten Abschirmelementes (6) mit dem zweiten Diffusor (5) angeordnet ist.

8. Abgaswärmeübertrager (1) nach einem der vorhergehenden Ansprüche, **dadurch gekennzeichnet, dass** der zweite Diffusor (5) einen in Strömungsrichtung (11) des ersten Fluids dem zweiten Abschirmelement (6) nachgeordneten Wasserabscheider (16) aufweist.

9. Abgaswärmeübertrager (1) nach einem der vorhergehenden Ansprüche, **dadurch gekennzeichnet, dass** das zweite Abschirmelement (6) im zumindest teilweise aufgestellten Randbereich (9) eine zweite Öffnung (19) aufweist, welche zwischen dem nachgeordneten Wasserabscheider (16) und der dem Gehäuse (4) zugewandten Eintrittsöffnung des zweiten Diffusors (5) angeordnet ist.

10. Abgaswärmeübertrager (1) nach einem der vorhergehenden Ansprüche, **dadurch gekennzeichnet, dass** er eine Vielzahl von ersten Strömungskanälen (2) aufweist, mit einem ersten Abschirmelement (6) und einem zweiten Abschirmelement (6), welche mengenmäßig eine, der Vielzahl der ersten Strömungskanäle (2) entsprechende Anzahl von Durchzügen (7) aufweisen und eine Vielzahl von Distanzelementen (8) aufweisen, wobei jeweils ein Abschirmelement (6) von der dem Gehäuse (4) abgewandten Seite auf einen der Rohrböden (3) aufgesetzt ist.

## Claims

1. An exhaust gas heat exchanger (1) for use in a motor vehicle, having at least one first flow channel (2) conducting a first fluid, which is taken up in its end regions in a respective tube sheet (3), having a housing (4) which surrounds the first flow channel (2), wherein the housing (4) has an inlet opening and an outlet opening and forms a second flow channel (10) for a second fluid, wherein a second fluid is able to flow through the housing and the second fluid is able to flow around the first flow channel (2), wherein the tube sheets (3) are inserted in the housing (4) such that the first flow channel (2) is sealed off from the second flow channel (10), having a first diffuser (5) which conducts the first fluid into the first flow channel (2) and a second diffuser (5) which conducts the first fluid out of the first flow channel (2), wherein the exhaust gas heat exchanger (1) has at least one first shielding element (6) which has at least one first passage (7) and at least one first spacing element (8) which is placed on a tube sheet (3) from the side facing away from the first flow channel (2), and wherein the outer contour of the passage (7) substantially coincides with the inner contour of the first flow channel (2), **characterised in that** the first shielding element (6) has an at least partially circumferential upstanding edge region (9) with which the shielding element (6) is supported on the first diffuser (5).

2. The exhaust gas heat exchanger (1) according to claim 1, **characterised in that** the passage (7) projects into a first flow channel (2).

3. The exhaust gas heat exchanger (1) according to claim 1 or 2, **characterised in that** the outer cross-section of the passage (7) is smaller than the inner cross-section of the first flow channel (2).

4. The exhaust gas heat exchanger (1) according to one of the preceding claims, **characterised in that** the outer contour of the passage (7) does not contact the inner contour of the first flow channel (2).

5. The exhaust gas heat exchanger (1) according to one of the preceding claims, **characterised in that** the spacing element (8) keeps apart the first shielding element (6) relative to the tube sheet (3).

6. The exhaust gas heat exchanger (1) according to one of the preceding claims, **characterised in that** a second shielding element (6) is fixedly connected to the second diffuser (5) at least at one location (18) .

7. The exhaust gas heat exchanger (1) according to one of the preceding claims, **characterised in that** the second diffuser (5) has a first opening (17) in a side wall which is arranged between the inlet opening of the second diffuser (5) facing the housing (4) and the connecting site of the second shielding element (6) to the second diffuser (5).

8. The exhaust gas heat exchanger (1) according to one of the preceding claims, **characterised in that** the second diffuser (5) has a water separator (16) placed downstream of the second shielding element (6) in the flow direction (11) of the first fluid.

9. The exhaust gas heat exchanger (1) according to one of the preceding claims, **characterised in that** the second shielding element (6) in the at least partially upstanding edge region (9) has a second opening (19) which is arranged between the downstream water separator (16) and the inlet opening of the second diffuser (5) facing the housing (4).

10. The exhaust gas heat exchanger (1) according to one of the preceding claims, **characterised in that** it has a plurality of first flow channels (2), having a first shielding element (6) and a second shielding element (6), which quantitatively have a number of passages (7) corresponding to the plurality of the first flow channels (2), and a plurality of spacing elements (8), wherein in each case a shielding element (6) is placed on one of the tube sheets (3) from the side facing away from the housing (4).

## Revendications

1. Echangeur de chaleur de gaz d'échappement (1) prévu pour l'utilisation dans un véhicule automobile, comprenant au moins un premier conduit d'écoulement (2) guidant un premier fluide, premier conduit d'écoulement qui est logé à chaque fois, dans ses zones d'extrémités, dans un plateau à tubes (3), comprenant un carter (4) qui entoure le premier conduit d'écoulement (2), où le carter (4) présente une ouverture d'entrée et une ouverture de sortie, et ledit carter forme un deuxième conduit d'écoulement (10) pour un deuxième fluide, où ledit carter peut être traversé par un deuxième fluide en circulation, et le premier conduit d'écoulement (2) peut être contourné par le deuxième fluide en circulation, où les plateaux à tubes (3) sont introduits dans le carter (4), de manière telle que le premier conduit d'écoulement (2) soit rendu étanche par rapport au deuxième conduit d'écoulement (10), ledit échangeur de chaleur de gaz d'échappement comprenant un premier diffuseur (5) qui dirige le premier fluide en le faisant entrer dans le premier conduit d'écoulement (2), et comprenant un deuxième diffuseur (5) qui dirige le premier fluide en le faisant sortir du premier conduit d'écoulement (2), où l'échangeur de chaleur de gaz d'échappement (1) présente au moins un premier élément de protection (6) qui comporte au moins un premier passage (7) et comporte au moins un premier élément d'écartement (8) qui est placé sur un plateau à tubes (3) se situant sur le côté opposé au premier conduit d'écoulement (2), et où le contour extérieur du passage (7) coïncide pratiquement avec le contour intérieur du premier conduit d'écoulement (2), **caractérisé en ce que** le premier élément de protection (6) présente une zone de bordure (9) disposée au moins partiellement de façon périphérique, zone de bordure avec laquelle l'élément de protection (6) est supporté sur le premier diffuseur (5).

2. Echangeur de chaleur de gaz d'échappement (1) selon la revendication 1, **caractérisé en ce que** le passage (7) pénètre dans un premier conduit d'écoulement (2).

3. Echangeur de chaleur de gaz d'échappement (1) selon la revendication 1 ou 2, **caractérisé en ce que** la section extérieure du passage (7) est plus petite que la section intérieure du premier conduit d'écoulement (2).

4. Echangeur de chaleur de gaz d'échappement (1) selon l'une quelconque des revendications précédentes, **caractérisé en ce que** le contour extérieur du passage (7) ne vient pas au contact du contour intérieur du premier conduit d'écoulement (2).

5. Echangeur de chaleur de gaz d'échappement (1) selon l'une quelconque des revendications précédentes, **caractérisé en ce que** l'élément d'écartement (8) place le premier élément de protection (6) à distance du plateau à tubes (3).

6. Echangeur de chaleur de gaz d'échappement (1) selon l'une quelconque des revendications précédentes, **caractérisé en ce qu'**un deuxième élément de protection (6) est solidement relié au deuxième diffuseur (5), au niveau d'au moins un emplacement (18).

7. Echangeur de chaleur de gaz d'échappement (1) selon l'une quelconque des revendications précédentes, **caractérisé en ce que** le deuxième diffuseur (5) présente une première ouverture (17) placée dans une paroi latérale, première ouverture qui est disposée entre l'ouverture d'entrée - orientée vers le carter (4) - du deuxième diffuseur (5), et l'emplacement formant la liaison du deuxième élément de protection (6) avec le deuxième diffuseur (5).

8. Echangeur de chaleur de gaz d'échappement (1) selon l'une quelconque des revendications précédentes, **caractérisé en ce que** le deuxième diffuseur (5) présente un séparateur d'eau (16) disposé, dans la direction d'écoulement (11) du premier fluide, en aval du deuxième élément de protection (6).

9. Echangeur de chaleur de gaz d'échappement (1) selon l'une quelconque des revendications précédentes, **caractérisé en ce que** le deuxième élément de protection (6) présente une deuxième ouverture (19) placée dans la zone de bordure (9) disposée au moins partiellement, deuxième ouverture qui est disposée entre le séparateur d'eau (16) placé en aval, et l'ouverture d'entrée - orientée vers le carter (4) - du deuxième diffuseur (5).

10. Echangeur de chaleur de gaz d'échappement (1) selon l'une quelconque des revendications précédentes, **caractérisé en ce qu'**il présente une multiplicité de premiers conduits d'écoulement (2), ledit échangeur de chaleur de gaz d'échappement comprenant un premier élément de protection (6) et un deuxième élément de protection (6) qui présentent, quantitativement, un nombre de passages (7) correspondant à la multiplicité des premiers conduits d'écoulement (2), et qui présentent une multiplicité d'éléments d'écartement (8), où un élément de protection (6) se situant sur le côté opposé au carter (4) est placé à chaque fois sur l'un des plateaux à tubes (3).
